# EUROPÄISCHE PATENTSCHRIFT

(11) **EP 0 427 969 B1**
(45) Veröffentlichungstag und Bekanntmachung des Hinweises auf die Patenterteilung: **26.04.1995**
(21) Anmeldenummer: 90119867.1
(22) Anmeldetag: 17.10.1990
(51) Int. Cl.: G01S 13/10, G01S 17/10

(54) **Impulslaufzeitmessanordnung**
Pulse time of flight measurement device
Dispositif de mesure du temps de vol d'une impulsion

(30) Priorität: 14.11.1989 DE 3937787
(43) Veröffentlichungstag der Anmeldung: 22.05.1991
(73) Patentinhaber: Leica AG, CH-9435 Heerbrugg (CH)
(72) Erfinder: Tiedeke, Joachim, CH-9435 Heerbrugg (AG) (CH)

(56) Entgegenhaltungen:
- EP-A- 0 269 902
- DE-A- 2 048 200
- DE-A- 3 620 226
- PATENT ABSTRACTS OF JAPAN, Bd. 8, Nr. 23 (P-251)(1460) 31. Januar 1984;& JP-A-58180970
- PATENT ABSTRACTS OF JAPAN, Bd. 4, Nr. 115 (P-23)16. August 1980;& JP-A-55070761
- PATENT ABSTRACTS OF JAPAN, Bd. 10, Nr. 282 (P-500)25. September 1986;& JP-A-61102506

## Beschreibung

Die Erfindung betrifft eine Impulslaufzeitmeßanordnung nach dem Oberbegriff des Anspruchs 1.

Eine derartige Impulslaufzeitmeßanordnung ist aus der DE-A 36 20 226 bekannt. Sie eignet sich besonders für Laserentfernungsmesser geringer Sendeimpuls-Energie zur Messung an entfernten, kleinen, schwach reflektierenden Objekten.

Unter solchen Umständen sind die empfangenen Impulse sehr schwach und sind teilweise kleiner als in der Anordnung auftretende Rauschsignale. Der Analog-Digital-Wandler und der Parallel-Addierer können daher mit geringer Bitzahl ausgeführt werden, wodurch die nötige Verarbeitungsgeschwindigkeit einfach erreichbar wird und der Schaltungsaufwand gering gehalten wird.

Treten durch nahe oder stark reflektierende Objekte hohe empfangene Impulse auf, so wird der Analog-Digital-Wandler oder nach wenigen aufaddierten Impulsen der Parallel-Addierer übersteuert. Das hat zur Folge, daß der Maximalwert des jeweiligen Ausgangssignals über mehrere Abtastimpulsintervalle hinweg erreicht wird. Die Peaklagenbestimmung wird dadurch unbestimmt.

Bei einem Ziel-Ortungs- und Entfernungs-Meßsystem gemäß der DE 28 45 164 C2 ist bei der digitalen Verarbeitung von Empfangsimpulsen dauernd ein Differenzierer eingeschaltet.

Es ist Aufgabe der vorliegenden Erfindung, eine gattungsgemäße Impulslaufzeitmeßanordnung so zu verändern, daß auch für große empfangene Impulse die Meßgenauigkeit nicht verschlechtert wird. Es ist eine weitere Aufgabe, die Meßgenauigkeit darüber hinaus zu verbessern.

Diese Aufgabe wird gelöst durch die Ausstattung einer gattungsgemäßen Impulslaufzeitmeßanordnung mit den kennzeichnenden Merkmalen des Anspruchs 1.
Weitere vorteilhafte Ausgestaltungen sind Gegenstand der Unteransprüche 2 bis 10.

Zur digitalen Darstellung eines differenzierten Signals werden nicht unbedingt weniger Bits benötigt als für das unveränderte Signal. Einem Maximum des unveränderten Signals entspricht aber ein Nulldurchgang zwischen zwei Extrema des differenzierten Signals, und dessen Lage und Bestimmtheit wird durch eine Übersteuerung des Analog-Digital-Wandlers nicht beeinflußt. Das macht sich die Erfindung zu nutze.

Ähnliches ist als Deltamodulation bekannt und wird z.B. im Bereich der Spracherkennung angewendet.

Im folgenden wird die Erfindung anhand der Zeichnung im Einzelnen dargestellt. Es zeigen:
- Fig. 1: Ein Blockschaltbild der Impulslaufzeitmeßanordnung gemäß einem Beispiel.
- Fig. 2: Das analoge Laufzeitsignal eines Laser-Laufzeit-Entfernungsmessers (an der Stelle A der Fig. 1)
a) für große Entfernung (140m)
b) für kleine Entfernung (30m).
- Fig. 3: Das Signal nach der Analog-Digital-Wandlung (Stelle B der Fig. 1), Differenzierglied ausgeschaltet
a) für große Entfernung (140m)
b) für kleine Entfernung (30m).
- Fig. 4 a/b: Das Ausgangssignal des Parallel-Addierers (Stelle C in Fig. 1), Differenzierglied ausgeschaltet.
- Fig. 5 a/b: Wie Fig. 3 a/b, jedoch Differenzierglied eingeschaltet.
- Fig. 6 a/b: Wie Fig. 4 a/b, jedoch Differenzierglied eingeschaltet.

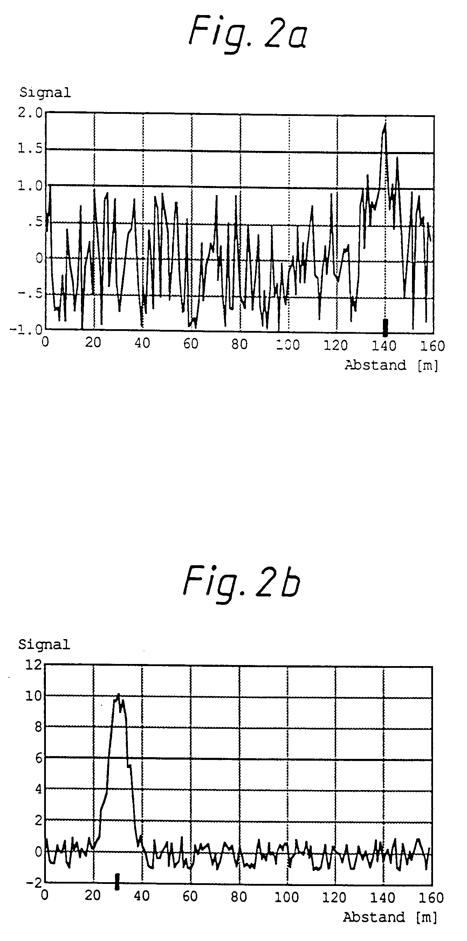

Die Fig. 2 bis Fig. 6 sind das Ergebnis von Computersimulationen.

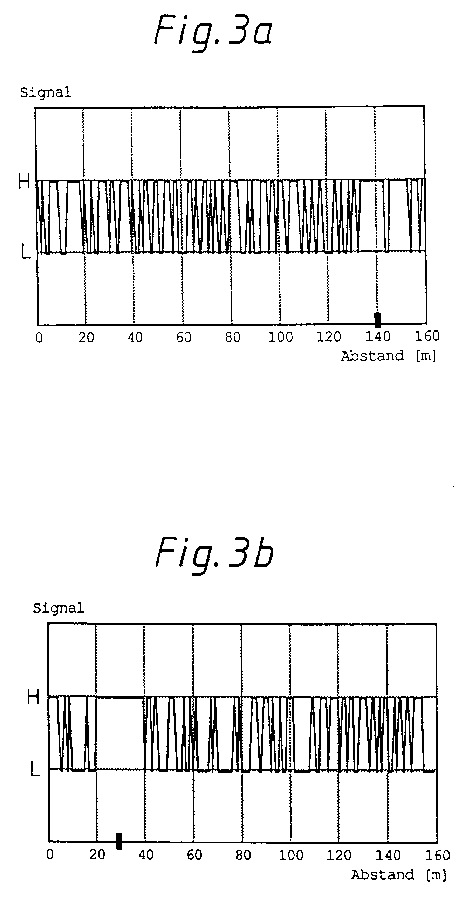

Dabei wurden (Fig. 2a/b) Impulse vorgegebener Form und Amplitude mit statistischem Rauschen vorgegebener mittlerer Amplitude überlagert und für die Fig. 3 bis 6 die im folgenden beschriebenen Verarbeitungsschritte simuliert. Dies dient der verständlicheren Darstellung und trägt der Schwierigkeit Rechnung, die sehr schnellen energiearmen Signale aus der komplexen Anordnung störungsfrei abzuleiten.

Die Abszisse gibt den Objektabstand in Metern an. Über die Beziehung: Abstand = 1/2 x Lichtgeschwindigkeit x Laufzeit ist die Abstandsangabe der Laufzeit proportional.

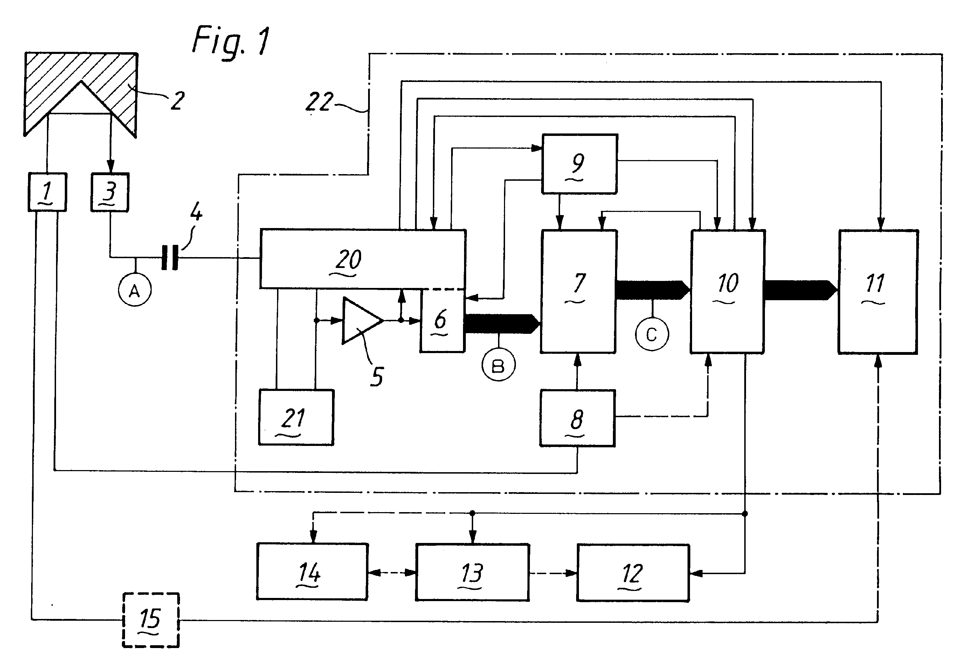

Die Fig. 1 zeigt zunächst einen Lichtimpulssender 1, ein lichtreflektierendes Objekt 2 und einen Lichtempfänger 3, welche eine optische Impulslaufzeitmeßstrecke bilden. Der Lichtimpulssender 1 besteht z. B. aus einer GaAs-Laserdiode mit Stromversorgung, Pulsformung im Nanosekundenbereich und Stabilisierung. Das Objekt 2 ist als Tripelspiegel, also als kooperatives Element dargestellt. Die Erfindung findet aber besonders vorteilhafte Anwendung bei beliebigen, diffus reflektierenden Objekten, wie Maschinenteilen, Gebäuden usw.

Als Lichtempfänger 3 dient z. B. eine Avalanche-Photodiode mit Stromversorgung und Regelung des Arbeitsbereichs. Lichtimpulssender 1 und Lichtempfänger 3 enthalten in der Regel zudem Optiken zur Bestimmung einer geeigneten Geometrie der Sende- und Empfangslichtbündel. Ein Kondensator 4 unterdrückt durch kapazitive Signalauskopplung Gleichlichtanteile. An der Stelle A liegt dann ein elektrisches Signal vor, das Laufzeit und Intensität des empfangenden Lichtimpulses und einen davon unabhängigen Rauschanteil enthält.

Über einen Verstärker 5 wird das Signal einem n-Bit-Analog-Digital-Wandler 6 zugeführt. Der Analog-Digital-Wandler 6 hat vorzugsweise eine niedrige Bitzahl, insbesondere nur 1 Bit. Das digitale Signal B vom Ausgang des Analog-Digital-Wandlers 6 wird einem Parallel-Addierer 7 zugeführt.

Ein Triggerimpulsgenerator 8 mit einer Pulsrate im Kilohertzbereich steuert den Lichtimpulssender 1, den Parallel-Addierer 7 und eine Auswerteschaltung 10, welche weiter unten beschrieben wird.

Ein Abtastimpulsgenerator 9 mit einer Pulsrate im Megahertzbereich erzeugt den Arbeitstakt des Analog-Digital-Wandlers 6 und des Parallel-Addierers 7 und gibt das Zeitnormal für die Auswerteschaltung 10.

Der Parallel-Addierer 7 hat eine Anzahl von Kanälen, die ausreicht, den Empfangsimpuls für die größte und kleinste Reichweite der Anordnung voll zu erfassen. Die Anzahl von Kanälen ist also größer als das Produkt aus größter Laufzeit und Frequenz des Abtastimpulsgenerators 9.

Die Auswerteeinrichtung 10 bestimmt aus dem Datenfeld C am Ausgang des Parallel-Addierers 7 die Laufzeit des Lichtimpulses bzw. den Abstand zwischen Empfänger 3 und Objekt 2 und gibt diese an eine Meßwertanzeige 12, einen Meßwertspeicher 13 und/oder eine Verarbeitungseinrichtung 14 weiter.

Die Auswerteeinrichtung 10 kann die Impulslaufzeit einfach aus dem Kanal mit maximaler Signalamplitude bestimmen. Bevorzugt wird aber die Korrelation mit einem Soll-Datenfeld für die Impulsform. Alternativ kann auch Interpolation mit einer geeigneten, die erwartete Impulsform wiedergebenden Informationsfunktion eingesetzt werden. Dazu ist eine Einrichtung 11 zur Bereitstellung dieses Soll-Datenfeldes vorgesehen. Dies kann ein digitaler Speicher sein.

Die Einrichtung 11 kann jedoch auch über einen Übertrager 15 mit einem Lichtimpulssender 1 verbunden sein und für jede Messung ein Soll-Datenfeld aus einem Sendeimpuls ableiten. Dazu kann der Übertrager 15 aus einem kurzen Lichtleiter und einer den Teilen 3,4,5 und 6 entsprechenden Einrichtung bestehen.

Die soweit beschriebene Anordnung ist bekannt und entspricht der DE-A 36 20 226.

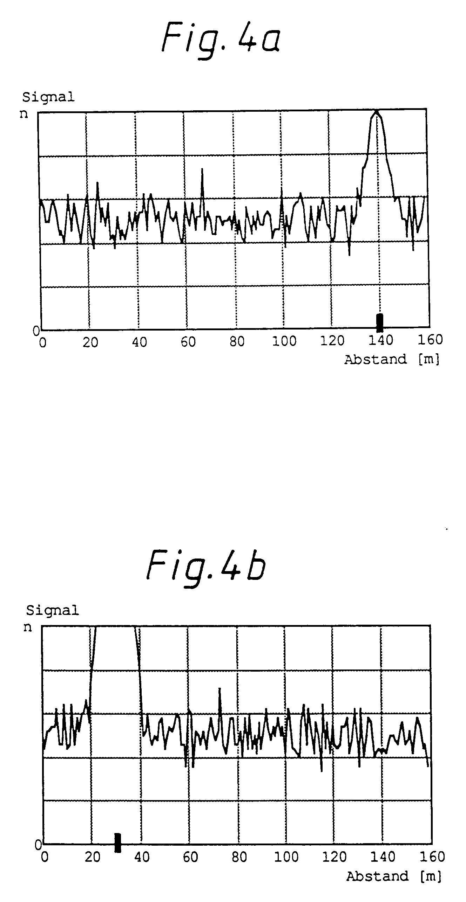

Die Figuren 2a, 3a und 4a zeigen, daß damit bei großer Meßdistanz, insbesondere bei nicht kooperativen Zielen, an der Stelle A der Fig. 1 auftretende Empfangssignale mit schlechtem Signal/Rausch-Verhältnis (Fig. 2a) an der Stelle C am Ausgang des Parallel-Addierers 7 (Fig. 4a) deutlich verbessert werden , obwohl dies nach dem Analog-Digital-Wandler 6 an der Stelle B der Fig. 1 nicht so aussieht (Fig. 3a).

Die Figuren 2b, 3b und 4b zeigen jeweils das gleiche wie die Figuren 2a, 3a und 4a, aber für Empfangssignale mit hohem Signal/Rausch-Verhältnis, wie sie bei geringer Meßdistanz auftreten. Bei C am Ausgang des Parallel-Addierers 7 (Fig. 4b) tritt dann durch dessen beschränkte Bitzahl ein Überlauf und eine Verschlechterung der Lagebestimmung des Maximums auf.

Dieses Problem führt zu der erfindungsgemäßen Weiterbildung der beschriebenen Impulslaufzeitmeßanordnung.

Dazu wird die Anordnung, wie in Fig. 1 gezeigt, um ein logisches Glied 20 und ein Differenzierglied 21 erweitert.

Beide Glieder 20, 21 sind zwischen den Kondensator 4 und den Analog-Digital-Wandler 6 geschaltet, und zwar vorzugsweise vor dem Verstärker 5.

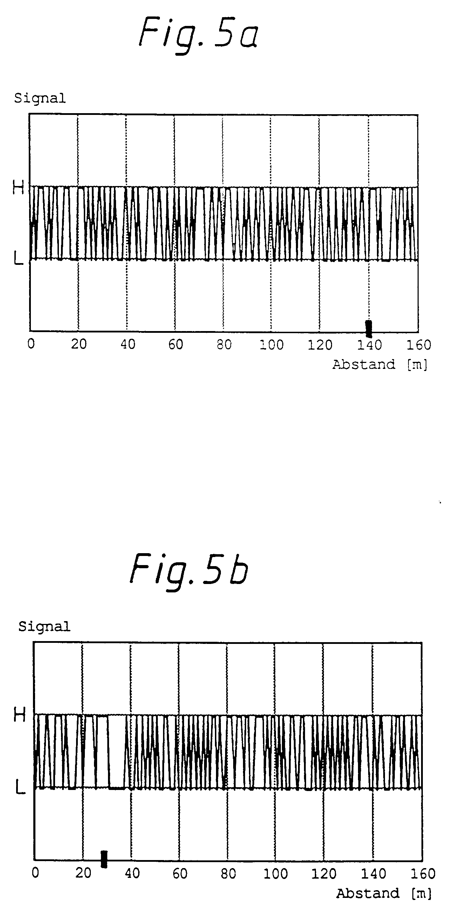

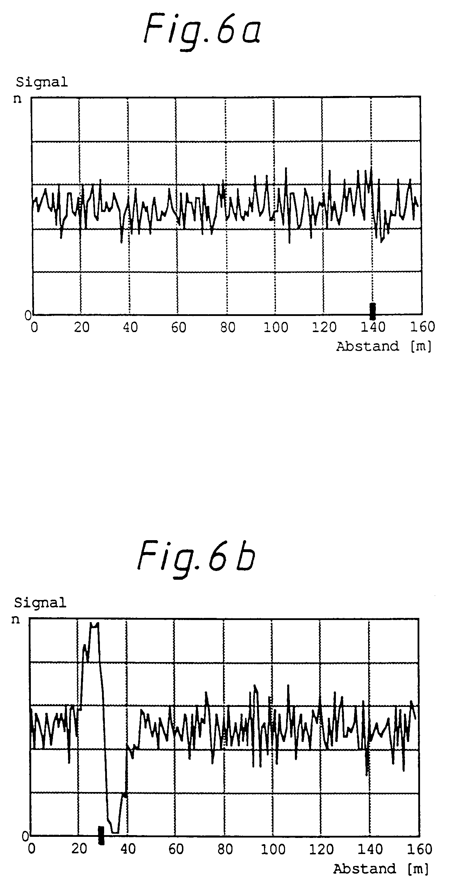

Das logische Glied 20 ist ein selbsthaltender Schwellwertschalter, der, solange das Empfangssignal an der Stelle A einen bestimmten Schwellwert nicht überschreitet, eine direkte Verbindung von der Stelle A zu dem Verstärker 5 schaltet, wodurch die gesamte Anordnung wie oben beschrieben funktioniert. Wird der Schwellwert überschritten, dann schaltet das logische Glied 20 das Differenzierglied 21 in die Signalleitung von der Stelle A zum Verstärker 5 und hält diesen Schaltzustand. Die dadurch erzielte Wirkung zeigen die Figuren 5a/b und 6a/b.

Für das Empfangssignal der Fig. 2b für kleine Entfernung mit hoher Amplitude und dagegen geringem Rauschen, ergibt sich an der Stelle B nach dem Analog-Digital-Wandler 6 statt dem Signalverlauf der Fig. 3b der Signalverlauf der Fig. 5b. An der Stelle C nach dem Parallel-Addierer 7 ergibt sich statt Fig. 4b die Fig. 6b.

In der Fig. 6b wurde durch die Wirkung des Differenzierglieds 21 aus dem Maximum des Eingangssignals A (Fig. 2b) ein steiler Durchgang durch den Mittelwert des Rauschens, dessen Lage sehr genau feststellbar ist.

Ist in der vorbekannten Art für das Eingangssignal A nach Fig. 2b die Abstandsbestimmung verschlechtert worden, vgl. Fig. 4b, so ergibt sich durch Einschalten des Differenzierglieds 21 eine deutliche Verbesserung, vgl. Fig. 6b.

Das Differenzierglied 21 muß jedoch durch das logische Glied 20 wieder aus der Signalverarbeitung ausgeschaltet werden, wenn das Eingangssignal bei großer Entfernung nur noch kleine Amplitude hat. Das Eingangssignal der Fig. 2a führt nämlich mit eingeschaltetem Differenzierglied 21 zu den Signalverläufen der Fig. 5a an der Stelle B nach dem Analog-Digital-Wandler 6 und der Fig. 6a an der Stelle C nach dem Parallel-Addierer 7.

Der in Fig. 6a entstandene Durchgang durch den Mittelwert des Rauschens an der dem Maximum in Fig. 2a entsprechenden Stelle ist im Rauschen praktisch untergegangen.

Die erfindungsgemäß eingeführte Kombination des logischen Glieds 20 mit dem Differenzierglied 21 bewirkt also, daß sowohl große als auch kleine Eingangssignale optimal ausgewertet werden.

Gegenüber der bekannten Ausführung muß die Auswerteeinrichtung 10 so ausgebildet werden, daß sie bei eingeschaltetem Differenzierglied 21 den Kanal bestimmt in dem ein dem Mittelwert des Rauschens entsprechender Grundpegel zwischen zwei vom Rauschen unterschiedenen Extrema des im Parallel-Addierer 7 aufsummierten Signals C vorliegt. Arbeitet die Auswerteeinrichtung 10 nach einem Korrelationsverfahren oder mit Interpolation, so muß an ihr dazu nichts geändert oder umgeschaltet werden, lediglich die Einrichtung 11 muß ein einem differenzierten Signal entsprechendes Soll-Datenfeld bzw. eine solche Interpolationsfunktion bereitstellen.

Die Umschaltung der Auswerteeinrichtung 10 oder der Einrichtung 11 erfolgt durch das logische Glied 20 simultan mit der Schaltung des Differenzierglieds 21.

Der dynamische Bereich des Analog-Digital-Wandlers 6 wird vorteilhaft so ausgelegt, daß er größer als der Betragsmittelwert des Rauschens an seinem Eingang (Stelle A, Fig. 1) ist, und daß die Digitalisierungs-Schrittweite so groß ist, daß das Rauschen im statistischen Mittel zur Hälfte den Wert Null des Ausgangssignals ergibt. In der Ausführung als 1-Bit-Analog-Digi-tal-Wandler ist dann der Mittelwert des Rauschens im Ausgangssig-nal 0,5.

Der Schwellwert des logischen Glieds 20 wird zur optimalen Nutzung der beiden Signalauswerteverfahren mit und ohne Differentiation bei einer Signalamplitude gesetzt, die im Bereich des zwei- bis zehnfachen der mittleren Amplitude des Rauschens (an der Stelle C) liegt. Dabei ist die Bitzahl des Analog-Digital-Wandlers 6 zu berücksichtigen. Zur Festlegung der Schwelle kann der Analog-Digital-Wandler 6 mit dem logischen Glied 20 verbunden sein und ein zusätzliches n + 1 Bit aufweisen, das nicht an den Parallel-Addierer 7 weitergeleitet wird, und bei dessen Setzen durch das Eingangssignal das logische Glied 20 das Differenzierglied 21 einschaltet.

Das Differenzierglied 21 kann einfach als RC-Glied am Eingang des Verstärkes 5 ausgebildet sein, wodurch ein Differenzierverstärker gebildet wird. Das Differenzierglied 21 braucht keine exakte Differentiation auszuführen, da das Signal von dem Analog-Digital-Wandler 6 nur in wenige Bits zerlegt wird.

Es ist vorteilhaft, wenn das logische Glied 20 gleichzeitig mit dem Einschalten des Differenzierglieds 21 auch den Abtastimpulsgenerator 9 auf eine erhöhte Impulsrate umschaltet. Der Parallel-Addierer 7 mit einer bestimmten Anzahl von Kanälen wird so für die Lichtimpulse mit kurzer Laufzeit durch Strecken der Zeitskala (Laufzeit pro Kanal) gut ausgenutzt, so daß eine weitere Verbesserung der Meßgenauigkeit erreicht wird.

Die Haltedauer für einen Schaltzustand des logischen Glieds 20 kann als fester Wert eingestellt werden, z. B. auf die Dauer von 50 Lichtimpulsen. Vorteilhafter ist es, wenn die Auswerteeinrichtung 10 das Ausgangssignal des Parallel-Addierers 7 fortlaufend auswertet und ein Maß für die durch das Rauschen verursachte Unsicherheit des Laufzeit- bzw. Entfernungswerts bestimmt und dieses Maß mit einem vorgesehenen Sollwert vergleicht. Wird dieser Sollwert unterschritten, dann wird der Meßwert ausgegeben an die Meßwertanzeige 12, den Meßwertspeicher 13 und/oder die Verarbeitungseinrichtung 14.

Gleichzeitig wird der Parallel-Addierer 7 auf Null zurückgesetzt und der gehaltene Schaltzustand des logischen Glieds 20 wird freigegeben, so daß der nächstfolgende Eingangssignalimpuls wieder mit dem Schwellwert verglichen wird.

Die Meßanordnung kann in verschiedener Technologie mit üblichen Bauelementen aufgebaut werden, wobei eine möglichst weitgehende Integration vorteilhaft ist. Beispielsweise sind Verstärker 5 (OP); Analog-Digital-Wandler 6, Parallel-Addierer 7 und Impulsgeneratoren 8,9 als IC's handelsüblich. Dabei muß nur auf die Eignung für die erforderlichen hohen Frequenzen (ca. 100 MHz) geachtet werden.

Vorzugsweise wird ein Mikroprozessor 22 geeigneter Taktfrequenz so programmiert, daß er alle Elemente 5 bis 11 und 20,21 enthält, also außer Sender 1 und Empfänger 3 und Meßwertanzeige 12 usw. den gesamten Kern der Impulslaufzeitmeßanordnung.

Die Laufzeit der Lichtimpulse von Sender 1 über das Objekt 2 zum Empfänger 3 gibt dabei die notwendige Zeitskala für die Datenverarbeitung vor.

## Patentansprüche

1. Impulslaufzeitmeßanordnung mit
- einem Lichtimpulssender (1)
- einem Empfänger (3) und einem Verstärker (5),
- einem Analog-Digital-Wandler (6),
- einem Parallel-Addierer (7) mit einer Anzahl von Kanälen und
- einem Triggerimpulsgenerator (8) für Triggerimpulse und
- einem Abtastimpulsgenerator (9)
**gekennzeichnet durch**
- ein Differenzierglied (21) und
- ein logisches Glied (20) mit einem Eingang, der parallel zu dem Eingang des Analog-Digital-Wandlers (6)geschaltet ist, und welches dann, wenn die Amplitude des Signals am Eingang einen bestimmten Wert erreicht, zwischen Empfänger (3) und Analog-Digital-Wandler (6) das Differenzierglied (21) einschaltet und diesen Schaltzustand für die Dauer einer Vielzahl von Triggerimpulsen aufrecht erhält.

2. Impulslaufzeitmeßanordnung nach Anspruch 1, **dadurch gekennzeichnet**, daß
- Lichtimpulssender (1) und Empfänger (3) mit optischen Signalen einer Dauer im Nanosekunden-Bereich arbeiten
- der Triggerimpulsgenerator (8) eine Impulsrate im Kilohertz-Bereich erzeugt und
- der Abtastimpulsgenerator (9) eine Impulsrate im MegahertzBereich erzeugt.

3. Impulslaufzeitmeßanordnung nach Anspruch 1, **dadurch gekennzeichnet**, daß
der Abtastimpulsgenerator (9) zwei verschiedene Impulsraten erzeugt, wobei die eine Impulsrate ein Abtastintervall ergibt, das etwa der Halbwertsbreite des Signalimpulses des Senders (1) entspricht, und die zweite Impulsrate ein höchstens halb so langes Abtastintervall ergibt, und wobei die zweite Impulsrate dann an den Analog-Digital-Wandler (6) und den Parallel-Addierer (7) gelegt wird, wenn das Differenzierglied (21) eingeschaltet ist.

4. Impulslaufzeitmeßanordnung nach Anspruch 1, **dadurch gekennzeichnet**, daß der dynamische Bereich des Analog-Digital-Wandlers (6) so ausgelegt ist, daß er größer als der Betragsmittelwert des Rauschens an seinem Eingang ist, und daß die Digitalisierungs-Schrittweite des Analog-Digital-Wandlers (6) so ausgelegt ist, daß das Rauschen an seinem Eingang im statistischen Mittel zur Hälfte den Wert Null des Ausgangssignals ergibt.

5. Impulslaufzeitmeßanordnung nach Anspruch 1, **dadurch gekennzeichnet**, daß eine Auswerteeinrichtung (10) vorgesehen ist,
die den Inhalt des Parallel-Addierers (7) auswertet,
wobei sie den Kanal bestimmt in dem das Maximum eines im Parallel-Addierer (7) aufsummierten Impulses vorliegt, wenn das Differenzierglied (21) nicht eingeschaltet ist, und
wobei sie den Kanal bestimmt, in dem ein dem Mittelwert des Rauschens entsprechender Grundpegel zwischen zwei vom Rauschen unterschiedenen Extrema eines im Parallel-Addierer (7) aufsummierten Signals vorliegt, wenn das Differenzierglied (21) eingeschaltet ist.

6. Impulslaufzeitmeßanordnung nach Anspruch 5, **dadurch gekennzeichnet**, daß die Auswerteeinrichtung (10) den Inhalt des Parallel-Addierers (7) nach einem Korrelationsverfahren auswertet.

7. Impulslaufzeitmeßanordnung nach Anspruch 5, **dadurch gekennzeichnet**, daß die Auswerteeinrichtung (10) den Inhalt des Parallel-Addierers (7) nach einem Interpolationsverfahren auswertet.

8. Impulslaufzeitmeßanordnung nach Anspruch 5,6 oder 7, **dadurch gekennzeichnet**, daß die Auswerteeinrichtung (10) den bestimmten Kanal einer Laufzeit vom Lichtimpulssender (1) über das Objekt (2) zum Empfänger (3), sowie einem Abstand zwischen dem reflektierenden Objekt (2) und dem Empfänger (3) zuordnet und die Laufzeit und/oder den Abstand einer Anzeige (12), einem Speicher (13), oder einer Verarbeitungseinrichtung (14) zuführt.

9. Impulslaufzeitmeßanordnung nach Anspruch 5, **dadurch gekennzeichnet**, daß die Auswerteeinrichtung (10) zu dem bestimmten Kanal ein Maß für die durch das Rauschen verursachte Unsicherheit erzeugt und einen Vergleich des Istwerts dieses Maßes für die Unsicherheit mit einem vorbestimmten Sollwert ausführt und bei Unterschreiten des Sollwertes den bestimmten Kanal als Meßwert an eine Meßwertanzeige (12), einen Meßwertspeicher (13) und/oder eine Verarbeitungseinrichtung (14) leitet, ebenfalls den Parallel-Addierer (7) auf Null schaltet und den zuvor aufrechterhaltenen Schaltzustand des logischen Glieds (20) freigibt.

10. Impulslaufzeitmeßanordnung nach Anspruch 1, **dadurch gekennzeichnet**, daß der Analog-Digital-Wandler (6) mehr Bits aufweist als an den Parallel-Addierer (7) weitergeleitet und die restlichen Bits dem logischen Glied (20) zugeführt werden.

## Claims

1. Pulse transit time measuring arrangement with
- a light pulse transmitter (1),
- a receiver (3) and an amplifier (5),
- an analog-to-digital converter (6),
- a parallel adder (7) with a number of channels and
- a trigger pulse generator (8) for trigger pulses and
- a scanning pulse generator (9),
characterised by
- a differentiating member (21) and
- a logic member (20) and an input, which is connected in parallel with the input of the analog-to-digital converter (6), and which - when the amplitude of the signal at the input has reached a certain value - switches the differentiating member (21) in between the receiver (3) and the analog-to-digital converter (6) and maintains this switching state in being for the duration of a plurality of trigger pulses.

2. Pulse transit time measuring arrangement according to claim 1, characterised thereby, that
- the light pulse transmitter (1) and the receiver (3) operate with signals of a duration in the nanosecond range,
- the trigger pulse generator (8) produces a pulse rate in the kilohertz range and
- the scanning pulse generator (9) produces a pulse rate in the megahertz range.

3. Pulse transit time measuring arrangement according to claim 1, characterised thereby, that the scanning pulse generator (9) produces two different pulse rates, wherein the one pulse rate results in a scanning interval which about corresponds with the half-value width of the signal pulse of the transmitter (1) and the second pulse rate results in a scanning interval which is at most half as long and wherein the second pulse rate is applied to the analog-to-digital converter (6) and the parallel adder (7) when the differentiating member (21) is switched in.

4. Pulse transit time measuring arrangement according to claim 1, characterised thereby, that the dynamic range of the analog-to-digital converter (6) is so designed that it is greater than the mean magnitude value of the noise at its input and that the digitalising step width of the anlog-to-digital converter (6) is so designed that the noise at its input in the statistic mean half of the time produces the value zero of the output signal.

5. Pulse transit time measuring arrangement according to claim 1, characterised thereby, that an evaluating equipment (10) is provided, which evaluates the content of the parallel adder (7), for which it ascertains the channel, in which the maximum of a pulse totalled in the parallel adder (7) is present when the differentiating member (21) is not switched in, and for which it ascertains the channel, in which a base level corresponding with the mean value of the noise is present between two extremes, which differ from the noise, of a signal totalled in the parallel adder (7) when the differentiating member (21) is switched in.

6. Pulse transit time measuring arrangement according to claim 5, characterised thereby, that the evaluating equipment (10) evaluates the content of the parallel adder (7) by a correlation process.

7. Pulse transit time measuring arrangement according to claim 5, characterised thereby, that the evaluating equipment (10) evaluates the content of the parallel adder (7) by an interpolation process.

8. Pulse transit time measuring arrangement according to claim 5, 6 or 7, characterised thereby, that the evaluating equipment (10) associates the ascertained channel with a transit time from the light pulse transmitter (1) by way of the object (2) to the receiver (3) as well as a spacing between the reflecting object (2) and the receiver (3) and feeds the transit time and/or the spacing to a display (12), a storage device (13) or a processing equipment (14).

9. Pulse transit time measuring arrangement according to claim 5, characterised thereby, that the evaluating equipment (10) produces a measure for the uncertainty which is caused by the noise and concerns the ascertained channel and carries out a comparison of the actual value of this measure for the uncertainty with a predetermined target value and, on the target value being fallen below, conducts the ascertained channel as measured value to a measured value display (12), a measure value storage device (13) and/or to a processing equipment (14), likewise switches the parallel adder (7) to zero and releases the previously maintained switching state of the logic member (20).

10. Pulse transit time measuring arrangement according to claim 1, characterised thereby, that the analog-to-digital converter (6) displays more bits than are passed on to the parallel adder (7) and the remaining bits are fed to the logic member (20).

## Revendications

1. Dispositif de mesure du temps de parcours d'une impulsion comprenant
- un émetteur d'impulsions de lumière (1)
- un récepteur (3) et un amplificateur (5),
- un convertisseur analogique-numérique (6),
- un additionneur parallèle (7) ayant une pluralité de canaux et
- un générateur d'impulsions de déclenchement pour impulsions de déclenchement et
- un générateur d'impulsions de balayage (9)
caractérisé par
- un élément de différenciation (21) et
- un élément logique (20) ayant une entrée qui est montée en parallèle à l'entrée du convertisseur analogique-numérique (6) et qui, lorsque l'amplitude du signal à l'entrée atteint une valeur prédéterminée, met en service l'élément de différentiation (21) entre le récepteur (3) et le convertisseur analogique-numérique(6) et maintient cet état de commutation pendant la durée d'une pluralité d'impulsions de déclenchement.

2. Dispositif de mesure du temps de parcours d'une impulsion selon la revendication 1, caractérisé en ce que
- l'émetteur d'impulsions de lumière (1) et le récepteur (3) fonctionnent avec des signaux optiques d'une durée dans la gamme des nanosecondes.
- le générateur d'impulsions de déclenchement (8) produit une fréquence d'impulsions dans la gamme des kilohertz et
- le générateur d'impulsions de balayage (9) produit une fréquence d'impulsions dans la gamme des megahertz.

3. Dispositif de mesure de la durée de parcours d'impulsions selon la revendication 1, caractérisé en ce que
le générateur d'impulsions de balayage (9) produit deux fréquences d'impulsions différentes, une fréquence d'impulsions procurant un intervalle de balayage qui correspond approximativement à la demi-largeur de l'impulsion de signal de l'émetteur (1) et la seconde fréquence d'impulsions procurant un intervalle de balayage qui est au maximum la moitié, la seconde fréquence d'impulsions étant appliquée ensuite au convertisseur analogique-numérique (6) et à l'additionneur parallèle (7) lorsque l'élément différenciateur (21) est mis en service.

4. Dispositif de mesure de la durée de parcours d'une impulsion selon la revendication 1, caractérisé en ce que la zone dynamique du convertisseur analogique-numérique (6) est dimensionné de façon qu'elle soit supérieure à la valeur moyenne de la quantité de bruit à son entrée, et que la largeur de pas de numérisation du convertisseur analogique/numérique (6) est dimensionné de telle façon que le bruit à son entrée donne comme moyenne statistique à moitié la valeur zéro du signal de sortie.

5. Dispositif de mesure de la durée de parcours d'une impulsion selon la revendication 1, caractérisé en ce qu'un dispositif d'exploitation (10) est prévu qui exploite le contenu de l'additionneur parallèle (7), en déterminant le canal dans lequel se trouve le maximum d'une impulsion obtenue par sommation dans l'additionneur parallèle (7) lorsque l'élément différenciateur (21) n'est pas mis en service, et
en déterminant la canal dans lequel est présent un niveau de base correspondant à la valeur moyenne du bruit entre deux valeurs extrêmes différentes du bruit d'un signal de sommation dans l'additionneur parallèle (7) lorsque l'élément de différentiation (21) est mis en service.

6. Dispositif de mesure de la durée du temps de parcours d'une impulsion selon la revendication 5, caractérisé en ce que le dispositif d'exploitation (10) exploite le contenu de l'additionneur parallèle (7) selon un procédé de corrélation.

7. Dispositif de mesure de la durée de parcours d'une impulsion selon la revendication 5, caractérisé en ce que le dispositif d'exploitation (10) exploite le contenu de l'additionneur parallèle (7) selon un procédé d'interpollation.

8. Dispositif de mesure de la durée de parcours d'une impulsion selon l'une des revendications 5, 6 ou 7, caractérisé en ce que le dispositif d'exploitation (10) associe le canal déterminé à une durée de temps de parcours de l'émetteur d'impulsions de lumière (1) par l'intermédiaire de l'objet (2) au récepteur (3), ainsi qu'à la distance entre l'objet réfléchissant (2) et le récepteur (3) et amène la durée de temps de parcours et/ou la distance d'un affichage (12) à un dispositif de stockage (13) où à un dispositif de traitement (14).

9. Dispositif de mesure de la durée de parcours d'une impulsion selon la revendication 5, caractérisé en ce que le dispositif d'exploitation (10) produit pour le canal déterminé une mesure ou un degré pour l'insécurité occasionnée par le bruit et fait une comparaison de la valeur réelle de cette mesure de l'insécurité avec une valeur de consigne prédéterminée et transmet lors d'un passage en dessous de la valeur de consigne le canal déterminé comme valeur de mesure à un affichage de valeur de mesure (12), un dispositif de stockage de valeur de mesure (13) et/ou un dispositif de traitement (14), commute également l'additionneur parallèle 7 à zéro et libère l'état de commutation auparavant maintenu de l'élément logique (20).

10. Dispositif de mesure de la durée de parcours d'impulsion selon la revendication 1, caractérisé en ce que le convertisseur analogique-numérique (6) comporte un plus grand nombre de chiffres binaires qu'il transmet à l'additionneur parallèle (7) et que les chiffres binaires restants sont amenés à l'élément logique (20).
